# FASCICULE DE BREVET EUROPEEN

(11) **EP 1 498 794 B1**
(45) Date de publication et mention de la délivrance du brevet: **31.05.2006**
(21) Numéro de dépôt: 04291522.3
(22) Date de dépôt: 17.06.2004
(51) Int. Cl.: G05D 1/00

(54) **Système pour commander automatiquement des dispositifs hypersustentateurs d'un aéronef, en particulier des becs de bord d'attaque d'aile**
System zur automatischen Steuerung von Hochauftriebsklappen eines Flugzeugs, insbesondere Flügelvorderkanten
System for automatically controlling the high lift surfaces of an aircraft, in particular the wing leading edge slats

(30) Priorité: 15.07.2003 FR 0308603
(43) Date de publication de la demande: 19.01.2005
(73) Titulaire: AIRBUS France, 31060 Toulouse (FR)
(72) Inventeur: Delaplace, Franck, 31400 Toulouse (FR); Buisson, Dominique, 31000 Toulouse (FR)
(74) Mandataire: Hauer, Bernard

(56) Documents cités:
- FR-A- 2 425 380
- FR-A- 2 817 535
- US-A- 4 017 045
- US-A- 4 042 197
- US-A- 4 591 113

## Description

La présente invention concerne un système pour commander automatiquement des dispositifs hypersustentateurs d'un aéronef, en particulier des becs de bord d'attaque d'aile.

Bien que non exclusivement, la présente invention s'applique plus particulièrement à un avion, notamment un avion de transport gros porteur.

Il est connu, dans le but de modifier la portance de la voilure d'un avion ou de modifier sa marge vis-à-vis du décrochage aérodynamique, d'équiper ladite voilure de dispositifs hypersustentateurs usuels (becs de bord d'attaque et/ou volets de bord de fuite) qui sont déployables et rétractables. Ces dispositifs hypersustentateurs permettent d'augmenter sensiblement la portance de l'avion, lorsqu'ils sont déployés, et ainsi de diminuer sa vitesse d'approche.

Le pilote d'un avion configure, à l'aide d'un organe de commande usuel, dit levier becs/volets, lesdits dispositifs hypersustentateurs dans la position de son choix, en fonction des conditions (vitesse, altitude, ...) et des phases de vol (roulement, décollage, montée, croisière, descente, attente, approche, atterrissage). Les positions des dispositifs hypersustentateurs varient progressivement entre une première position correspondant à une rentrée (ou rétraction) complète desdits becs et volets (position "croisière") et une seconde position correspondant à une sortie (ou déploiement) complète desdits becs et volets (position "atterrissage") de manière à pouvoir définir plusieurs configurations connues de l'avion. Une configuration donnée de l'avion correspond donc à une position particulière desdits becs et desdits volets.

Ces dispositifs hypersustentateurs sont structurellement dimensionnés de façon connue, à partir des caractéristiques suivantes:
- détermination du domaine de vol minimal requis ;
- prise en compte de rafales de vent réglementaires pour en déduire les charges aérodynamiques maximales correspondantes ;
- application des autres charges possibles rencontrées par les dispositifs hypersustentateurs (charges au sol par exemple) pour en déduire les charges limites ; et
- détermination des charges extrêmes associées par application d'un coefficient de sécurité à partir desdites charges limites.

Néanmoins, il peut arriver, au cours d'un vol, que les charges aérodynamiques qui s'appliquent à ces dispositifs hypersustentateurs dépassent les charges limites qui ont été utilisées pour les dimensionner, de manière à causer des dommages importants et irréversibles (sous forme d'une déformation plastique) auxdits dispositifs hypersustentateurs.

On peut rencontrer de telles situations lors de fortes perturbations atmosphériques (importantes rafales de vent), lors de manoeuvres de pilotage peu conventionnelles (piqué de récupération de l'avion) ou lors d'actions erronées de la part de l'équipage navigant sur l'organe (ou levier) de commande des becs et/ou volets [par exemple, le pilote peut déplacer par erreur, lors de la phase de croisière ou de descente, ledit organe de commande des becs et des volets alors qu'il voulait activer celui des aérofreins, les deux organes étant proches l'un de l'autre]. Dans cette dernière situation, l'action erronée du pilote aurait pour conséquence d'engendrer un important moment cabreur de l'avion, difficile à contrer par le pilote.

On connaît des systèmes qui positionnent ou déplacent automatiquement des surfaces de contrôle aérodynamique d'aéronefs, tels que des dispositifs hypersustentateurs. A titre d'illustration, on notera que :
- le document FR-2 425 380 décrit un système de commande qui, lorsqu'un moteur de l'avion tombe en panne, agit automatiquement sur les gouvernes pour reconfigurer aérodynamiquement l'avion, de manière à compenser l'effet de la perte de poussée sur les caractéristiques aérodynamiques de l'aile ;
- le document US-4 042 197 décrit un dispositif qui a pour but d'optimiser, en phase de décollage et d'approche d'un avion, la position des volets, ainsi que la poussée de manière à réduire sensiblement le bruit engendré par ces équipements ; et
- le document FR-2 817 535 divulgue un système permettant d'optimiser automatiquement la position de dispositifs hypersustentateurs lors de la phase de décollage d'un aéronef afin de réduire la longueur de piste nécessaire au décollage et de réduire la traînée, ce qui permet d'obtenir une pente minimale de montée (avec un moteur en panne) permettant un décollage en toute sécurité.

On notera par ailleurs que ces systèmes de contrôle s'appliquent pour l'essentiel, soit aux gouvernes, soit aux volets de bord de fuite, et non pas aux becs de bord d'attaque de l'avion. La raison principale est que la portance d'un avion est limitée par un phénomène de décrochage qui apparaît lorsque l'incidence de l'avion dépasse une certaine valeur d'incidence appelée "incidence de décrochage". En effet, aux hautes incidences, l'écoulement devient instable à l'extrados de la voilure, les filets d'air se décollent, ce qui se traduit par une perte de portance. On sait que la valeur de cette incidence de décrochage diminue légèrement au fur et à mesure que les volets de bord de fuite sont braqués. C'est pour cette raison que les becs de bord d'attaque sont sortis au fur et à mesure de la sortie des volets de bord de fuite. Cependant, un système qui rentre ou sort automatiquement lesdits volets est relativement neutre en terme de marge par rapport au décrochage et peut donc être qualifié de relativement sécurisé vis-à-vis de ce phénomène aérodynamique.

En revanche, le braquage des becs de bord d'attaque est un paramètre qui influe fortement sur la valeur de l'incidence de décrochage. Par conséquent, le fait de passer d'un braquage Ab à un braquage Cb, avec Cb inférieure à Ab, peut s'avérer dangereux. En effet, alors que dans les conditions de braquage Ab l'incidence de décrochage reste éloignée du point de vol, dans les conditions de braquage Cb, l'avion peut se retrouver au-delà de l'incidence de décrochage.

Par conséquent, comme le risque de se retrouver dans une situation de marge faible (voire négative) par rapport au phénomène de décrochage n'est pas nulle, le positionnement des becs de bord d'attaque est commandé exclusivement par une action manuelle du pilote, via le levier becs/volets.

La présente invention a pour objet de remédier à ces inconvénients. Elle concerne un système de commande de dispositifs hypersustentateurs d'un aéronef, et plus spécifiquement des becs de bord d'attaque d'aile d'un avion, permettant d'optimiser automatiquement la position de ces derniers vis-à-vis de conditions de vol défavorables en terme de charges aérodynamiques.

A cet effet, selon l'invention, ledit système du type comportant:
- des moyens d'actionnement, pour déplacer lesdits dispositifs hypersustentateurs, en fonction d'ordres de commande reçus ;
- au moins un organe de commande susceptible d'être actionné par un pilote de l'aéronef ; et
- une unité de commande qui comporte un moyen de commande qui est susceptible d'engendrer des ordres de commande, en fonction de l'actionnement dudit organe de commande, pour commander lesdits moyens d'actionnement de sorte que ces derniers amènent lesdits dispositifs hypersustentateurs dans une position déterminée,
est remarquable en ce que ladite unité de commande comporte de plus :
- un premier dispositif susceptible d'engendrer, automatiquement, des ordres de commande auxiliaires qui sont transmis auxdits moyens d'actionnement pour rétracter automatiquement lesdits dispositifs hypersustentateurs, lorsque l'aéronef se trouve dans une première condition de vol ; et
- un second dispositif pour inhiber, automatiquement, des ordres de commande engendrés par ledit moyen de commande suite à un actionnement dudit organe de commande pour déployer lesdits dispositifs hypersustentateurs, lorsque l'aéronef se trouve dans une seconde condition de vol.

Ainsi, grâce à l'invention, lorsque l'aéronef se trouve dans ladite première condition de vol, c'est-à-dire, comme on le verra ci-dessous, dans une condition de vol pouvant entraîner des dommages structuraux au niveau des dispositifs hypersustentateurs, lesdits dispositifs hypersustentateurs (notamment des becs de bord d'attaque) sont automatiquement rétractés, et donc protégés, tout en garantissant la sécurité de l'aéronef grâce à une protection vis-à-vis de l'incidence de décrochage, comme précisé ci-après. La présente invention est particulièrement bien adaptée (bien que non exclusivement) à la commande de becs de bord d'attaque de voilure d'aéronef, comme dispositifs hypersustentateurs.

De plus, lorsque les dispositifs hypersustentateurs sont commandés à sortir (se déployer), mais que les situations de vol ne sont pas favorables ou dangereuses (seconde condition de vol précitée), le système conforme à l'invention inhibe leur sortie et protège donc l'aéronef vis-à-vis de telles situations défavorables, précisées ci-après.

En outre, la commande des dispositifs hypersustentateurs est réalisée de façon automatique, sans aucune intervention du pilote de l'aéronef, ce qui permet audit pilote de se concentrer exclusivement sur le pilotage.

Selon l'invention, ledit premier dispositif vérifie en continu, de façon automatique, si l'aéronef se trouve dans ladite première condition de vol, en tenant compte de la vitesse et de l'incidence de l'aéronef.

Dans un mode de réalisation préféré, ledit premier dispositif comporte :
- un premier moyen pour surveiller la vitesse de l'aéronef et émettre le cas échéant un premier signal indiquant un dépassement d'une vitesse limite autorisée ;
- un deuxième moyen pour surveiller l'incidence de l'aéronef et émettre le cas échéant un deuxième signal indiquant un dépassement d'une incidence limite autorisée ; et
- un troisième moyen pour engendrer lesdits ordres de commande auxiliaires, lorsqu'au moins lesdits premier et deuxième moyens émettent en même temps lesdits premier et deuxième signaux.

Dans ce cas, avantageusement:
- ledit premier moyen compare la vitesse effective de l'aéronef à ladite vitesse limite autorisée correspondant à une vitesse maximale autorisée, qui dépend de la configuration actuelle et de la masse de l'aéronef; et/ou
- ledit deuxième moyen compare l'incidence effective de l'aéronef à ladite incidence limite autorisée correspondant à une incidence de décrochage qui dépend d'une configuration de l'aéronef que l'on cherche à obtenir et du nombre de Mach de l'aéronef.

En outre, dans un mode de réalisation particulier, ledit premier dispositif comporte, de plus, un quatrième moyen pour surveiller la dérivée de l'incidence de l'aéronef et émettre le cas échéant un quatrième signal, et ledit troisième moyen engendre lesdits ordres de commande auxiliaires, uniquement lorsque ledit quatrième signal est émis en même temps que lesdits premier et deuxième signaux précités. Ceci permet d'augmenter davantage encore la sécurité.

De plus, de façon avantageuse, ledit quatrième moyen comporte :
- un premier élément pour comparer la dérivée de l'incidence de l'aéronef à une valeur de seuil prédéterminée et émettre le cas échéant un signal indiquant un dépassement de cette valeur de seuil ;
- un deuxième élément pour comparer l'incidence effective de l'aéronef à une valeur d'incidence dépendant de l'incidence de décrochage et émettre le cas échéant un signal indiquant un dépassement de cette valeur d'incidence ; et
- un troisième élément pour engendrer ledit quatrième signal, lorsque lesdits premier et deuxième éléments émettent en même temps des signaux de dépassement.

Par ailleurs, selon l'invention, ledit second dispositif vérifie, de façon automatique, si l'aéronef se trouve dans ladite seconde condition de vol, en tenant compte de la vitesse et de l'altitude de l'aéronef.

Dans un mode de réalisation préféré, ledit second dispositif comporte :
- un cinquième moyen pour surveiller la vitesse de l'aéronef et émettre le cas échéant un cinquième signal indiquant un dépassement d'une vitesse limite autorisée;
- un sixième moyen pour surveiller l'altitude de l'aéronef et émettre le cas échéant un sixième signal indiquant un dépassement d'une altitude limite autorisée ; et
- un septième moyen pour engendrer des ordres d'inhibition, lorsqu'au moins l'un desdits cinquième et sixième moyens émet l'un desdits cinquième et sixième signaux.

Dans ce cas, avantageusement:
- ledit cinquième moyen compare la vitesse effective de l'aéronef à ladite vitesse limite autorisée correspondant à une vitesse maximale autorisée, qui dépend de la configuration actuelle et de la masse de l'aéronef. De préférence, ledit cinquième moyen comporte, de plus, une boucle d'hystérésis, pour éviter de trop nombreux mouvements des dispositifs hypersustentateurs, dans le cas où la vitesse effective de l'aéronef oscille autour de ladite vitesse maximale autorisée ; et/ou
- ledit sixième moyen compare l'altitude effective de l'aéronef à ladite altitude limite autorisée correspondant à une altitude maximale possible pour une configuration de l'aéronef que l'on cherche à obtenir.

En outre, dans un mode de réalisation particulier, ledit second dispositif comporte, de plus :
- un huitième moyen susceptible de détecter tout actionnement de l'organe de commande pour déployer lesdits dispositifs hypersustentateurs ; et
- un neuvième moyen qui inhibe les ordres de commande correspondant à un tel actionnement pour déployer lesdits dispositifs hypersustentateurs, lorsque, à la fois, ledit huitième moyen détecte un tel actionnement et ledit septième moyen engendre des ordres d'inhibition.

Les figures du dessin annexé feront bien comprendre comment l'invention peut être réalisée. Sur ces figures, des références identiques désignent des éléments semblables.

La figure 1 montre un avion de transport civil, auquel est appliqué un système de commande conforme à l'invention.

La figure 2 est le schéma synoptique d'un système de commande conforme à l'invention.

Les figures 3 et 5 illustrent schématiquement des parties d'un système de commande conforme à l'invention.

Les figures 4 et 6 sont des graphiques permettant d'expliquer le fonctionnement de moyens particuliers d'un système de commande conforme à l'invention.

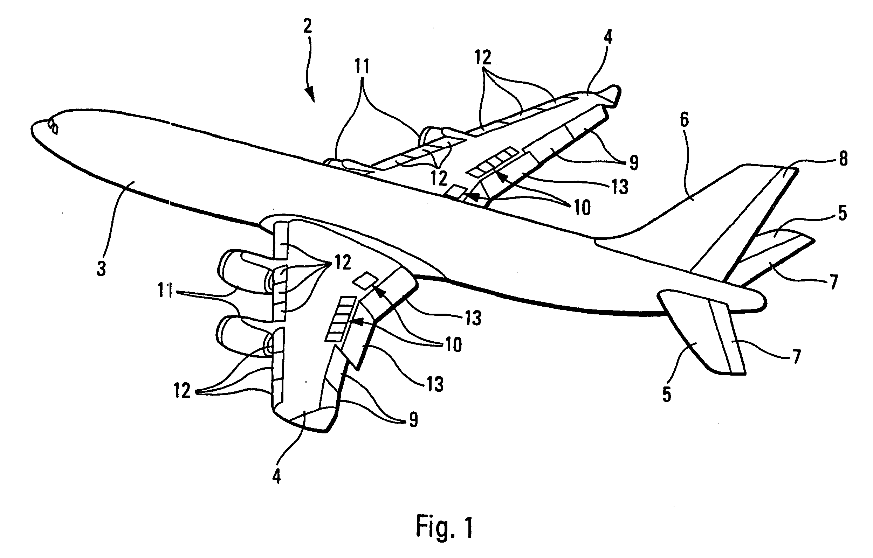

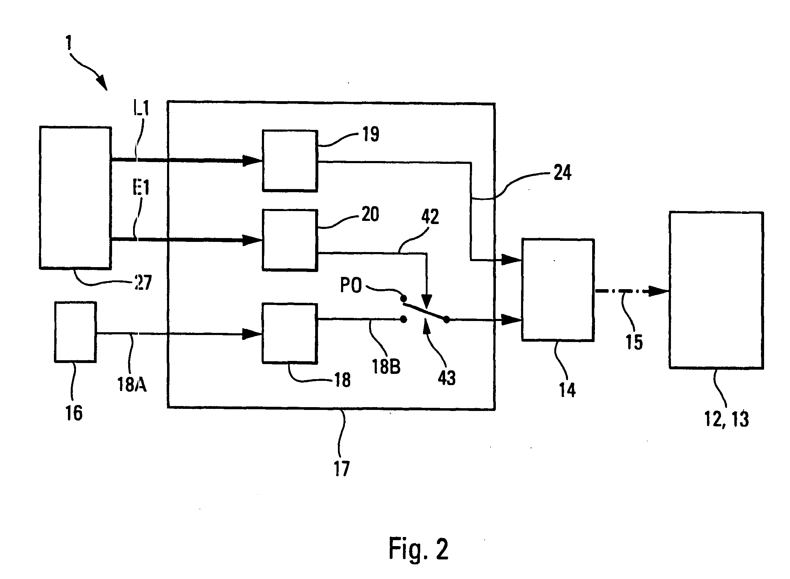

Le système de commande 1 conforme à l'invention et représenté schématiquement sur la figure 2, est appliqué à un aéronef 2, en particulier un avion de transport civil, tel que représenté sur la figure 1 et considéré dans la description suivante à titre d'exemple.

Cet avion de transport 2 comporte un fuselage 3, auquel sont raccordées, entre autres, deux ailes 4 formant la voilure principale, un empennage arrière horizontal formé de deux plans stabilisateurs 5 et une dérive 6. Chacun desdits plans stabilisateurs 5 est pourvu d'une gouverne de profondeur 7, et la dérive 6 est pourvue d'une gouverne de direction 8. De plus, chacune des ailes 4 porte notamment, de façon usuelle, des ailerons 9, des aérofreins 10 et plusieurs moteurs de propulsion 11.

Pour améliorer les performances de l'avion 2, chacune desdites ailes 4 est, de plus, pourvue de dispositifs hypersustentateurs usuels, à savoir des becs 12 au bord d'attaque de l'aile 4 et des volets 13 à son bord de fuite, qui sont susceptibles d'être amenés dans différentes positions. Ces dispositifs hypersustentateurs 12, 13 permettent d'augmenter la portance dudit avion 2.

A titre d'exemple, chaque aile d'un avion du type "Airbus A340" est équipée de sept becs 12 et deux volets 13.

Les positions des dispositifs hypersustentateurs 12, 13 varient progressivement entre une première position correspondant à une rentrée (ou rétraction) complète desdits becs et volets (position "croisière") et une seconde position correspondant à une sortie (ou déploiement) complète desdits becs et volets (position "atterrissage") de manière à pouvoir définir plusieurs configurations connues de l'avion 2, et dites "0", "1 ", "1 + F", "2", "3" et "Full" telles que :

| Configuration de l'avion | | Position des becs 12 | Position des volets 13 |
|---|---|---|---|
| "0" : | non hypersustentée | 0 | 0 |
| "1" : | très faiblement hypersustentée | 20 | 0 |
| "1 + F" : | faiblement hypersustentée | 20 | 17 |
| "2" : | moyennement hypersustentée | 23 | 22 |
| "3" : | très hypersustentée | 23 | 29 |
| "Full" : | complètement hypersustentée | 23 | 34 |

Le système 1 qui est embarqué sur l'avion 2 et qui est destiné à commander automatiquement lesdits dispositifs hypersustentateurs 12, 13 comporte, de façon connue, comme représenté sur la figure 2:
- une pluralité de moyens d'actionnement (regroupés sous la référence unique 14 sur la figure 2), pour déplacer lesdits dispositifs hypersustentateurs 12, 13 (regroupés sous une référence 12, 13 sur la figure 2), en fonction d'ordres de commande reçus, comme illustré par une liaison 15 en traits mixtes;
- au moins un organe de commande 16, par exemple un levier becs/volets, qui est susceptible d'être actionné par un pilote de l'avion 2 ; et
- une unité de commande 17 qui comporte un moyen de commande 18 usuel, qui est susceptible d'engendrer des ordres de commande, en fonction de l'actionnement dudit organe de commande 16, reçu par une liaison 18A, pour commander lesdits moyens d'actionnement 14 (liaison 18B) de sorte que ces derniers amènent lesdits dispositifs hypersustentateurs 12, 13 dans une position déterminée.

Le système de commande 1 conforme à l'invention est destiné plus particulièrement à commander automatiquement lesdits dispositifs hypersustentateurs afin d'optimiser automatiquement la position de ces derniers vis-à-vis de conditions de vol défavorables en terme de charges aérodynamiques. Il est particulièrement bien adapté (bien que non exclusivement) à la commande desdits becs 12 de bord d'attaque, comme dispositifs hypersustentateurs.

Pour ce faire, selon l'invention, ladite unité de commande 17 comporte de plus :
- un dispositif 19 susceptible d'engendrer, automatiquement, des ordres de commande auxiliaires qui sont transmis auxdits moyens d'actionnement 14 pour rétracter automatiquement lesdits becs 12, lorsque l'avion 2 se trouve dans une première condition de vol précisée ci-dessous ; et
- un dispositif 20 pour inhiber, automatiquement, des ordres de commande engendrés par ledit moyen de commande 18 suite à un actionnement dudit organe de commande 16 pour déployer lesdits becs 12, lorsque l'avion 2 se trouve dans une seconde condition de vol précisée ci-dessous.

Ainsi, grâce à l'invention, lorsque l'avion 2 se trouve dans ladite première condition de vol, c'est-à-dire, comme on le verra ci-dessous, dans une condition de vol pouvant entraîner des dommages structuraux notamment au niveau des becs 12, lesdits becs 12 sont automatiquement rétractés, et donc protégés, tout en garantissant la sécurité de l'avion 2 grâce à une protection vis-à-vis de l'incidence de décrochage, comme précisé ci-après.

De plus, lorsque les becs 12 sont commandés pour sortir ou se déployer, mais que les situations de vol ne sont pas favorables ou dangereuses (seconde condition de vol précitée), le système 1 conforme à l'invention inhibe (par l'intermédiaire du dispositif 20) leur sortie et protège ainsi l'avion 2 vis-à-vis de telles situations défavorables, précisées ci-après.

En outre, la commande des becs 12 est réalisée de façon automatique, sans aucune intervention du pilote de l'avion 2, ce qui permet audit pilote de se concentrer exclusivement sur les stricts aspects du pilotage.

Selon l'invention, ledit dispositif 19 surveille la vitesse effective V de l'avion 2 afin de détecter la présence de charges aérodynamiques trop importantes, susceptibles d'endommager lesdits becs 12. Ce dispositif 19 surveille aussi l'incidence effective α dudit avion 2, afin de s'assurer, dans le cas d'un changement de configuration des becs 12, que ladite incidence α ne soit pas trop proche de (voire ne dépasse pas) l'incidence de décrochage de la nouvelle configuration (que l'on cherche à obtenir).

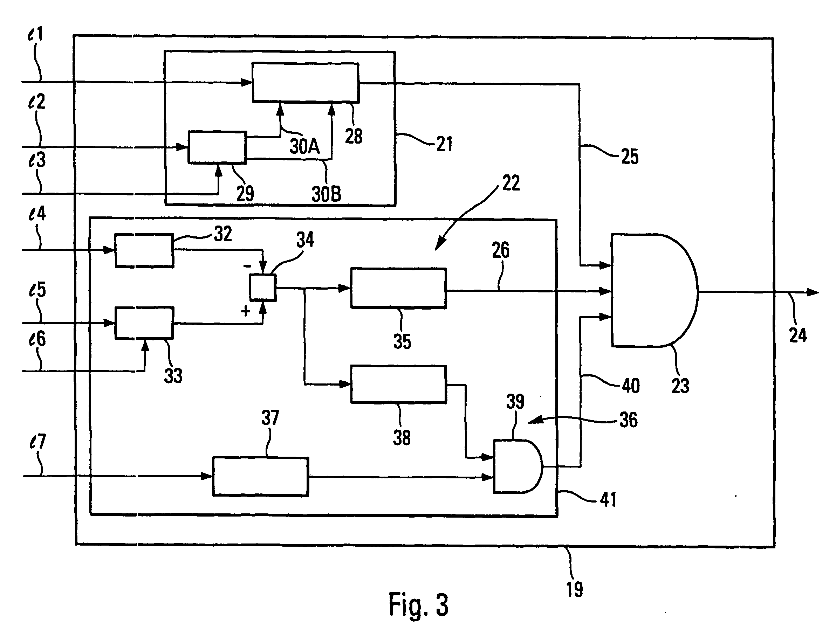

Pour ce faire, dans un mode de réalisation préféré représenté sur la figure 3, ledit dispositif 19 comporte :
- un moyen 21 précisé ci-dessous, pour surveiller la vitesse V de l'avion 2 et émettre le cas échéant un premier signal indiquant un dépassement d'une vitesse limite autorisée ;
- un moyen 22 précisé ci-dessous, pour surveiller l'incidence α de l'avion 2 et émettre le cas échéant un deuxième signal indiquant un dépassement d'une incidence limite autorisée ; et
- un moyen 23, en l'occurrence une porte logique ET, pour engendrer lesdits ordres de commande auxiliaires (destinés à rétracter automatiquement lesdits becs 12) et les transmettre auxdits moyens d'actionnement 14 par l'intermédiaire d'une liaison 24, lorsqu'au moins lesdits moyens 21 et 22 émettent en même temps lesdits premier et deuxième signaux (liaisons 25 et 26).

Ledit dispositif 1 9 est relié par une pluralité de liaisons ℓ1 à ℓ7 (regroupées sous une référence unique L1 sur la figure 2) à un ensemble 27 de sources d'informations précisées ci-dessous.

Ledit moyen 21 du dispositif 19 comporte un comparateur 28 pour comparer la vitesse effective V de l'avion 2 (reçue par la liaison ℓ1) à ladite vitesse limite autorisée correspondant à une vitesse maximale autorisée, reçue d'une table 29 par une liaison 30A.

Cette table 29 donne, en fonction de la configuration actuelle des becs/volets (liaison ℓ2) et de la masse de l'avion 2 (liaison ℓ3), ladite vitesse maximale autorisée Vseuil1 qui représente la vitesse que la vitesse V de l'avion 2 ne doit pas dépasser afin de ne pas endommager les becs 12. Au-delà de cette vitesse Vseuil1 , les becs 12 sont rétractés, afin de les protéger contre des charges aérodynamiques excessives.

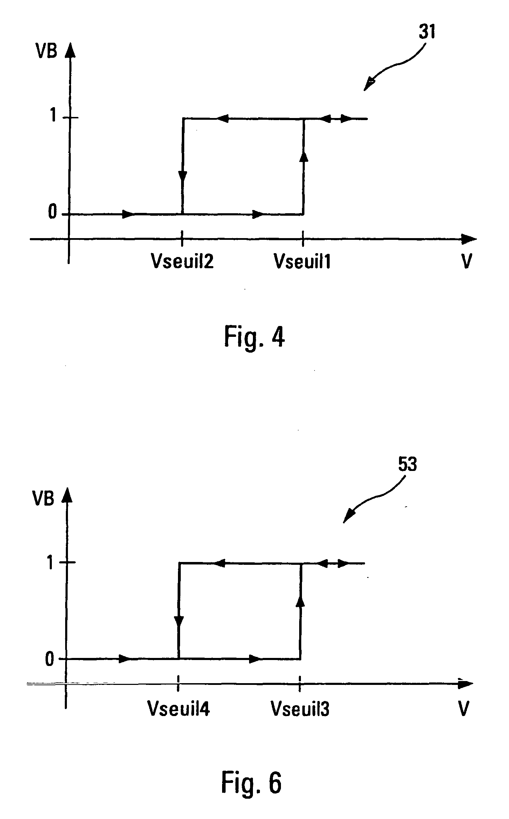

De plus, afin d'éviter un mouvement perpétuel desdits becs 12 dans le cas où la vitesse V de l'avion 2 oscillerait autour de cette vitesse Vseuil1, on introduit un élément d'hystérésis 31 (figure 4) dans le comparateur 28. Ainsi, tant que la vitesse de l'avion 2 n'est pas redescendue au-dessous d'une vitesse Vseuil2 (inférieure à la vitesse Vseuil1 et transmise par une liaison 30B au comparateur 28), ledit comparateur 28 émet comme valeur binaire VB la valeur "1" à la porte logique ET 23, c'est-à-dire les becs 12 ne sont alors pas autorisés à être redéployés. Ils restent donc rétractés.

Quand la vitesse V de l'avion 2 devient inférieure à la vitesse Vseuil2, la valeur "0" est transmise, comme valeur binaire VB, à la porte logique ET 23.

La condition précédente ne suffit pas pour autoriser la rétraction des becs 12. En effet, il est important de vérifier que la rétraction des becs 12 n'engendre pas une réduction trop importante de la marge vis-à-vis du décrochage, voire une chute de portance du fait d'une incidence α de l'avion 2, supérieure à l'incidence de décrochage de la configuration rétractée que l'on cherche à atteindre (l'incidence α utilisée, reçue par la liaison ℓ4, peut être lissée au moyen d'un filtre 32 afin de s'affranchir des possibles variations de mesure ou des effets de turbulence). C'est la raison de la présence du moyen 22 qui compare l'incidence effective α de l'avion 2 à ladite incidence limite autorisée correspondant à une incidence de décrochage.

Ce moyen 22 comporte une table 33 qui calcule, en fonction de la configuration que l'on cherche à obtenir pour protéger les becs 12 (liaison ℓ5) et en fonction du nombre de Mach de l'avion 2 (liaison ℓ6), l'incidence de décrochage αs de cette configuration que l'on cherche à obtenir. Un moyen de calcul 34 calcule alors la différence entre cette incidence de décrochage αs et l'incidence effective α, éventuellement lissée, de l'avion 2. Si la différence obtenue est trop faible, cela signifie qu'une rétraction des becs 12 amènerait l'avion 2 dans une condition proche de celle de décrochage. Il faut donc que cette différence soit supérieure à un seuil αseuil1 représentant une marge de sécurité suffisante pour rétracter les becs 12. Une valeur de 5° pour ce seuil αseuil1 semble réaliste. Un comparateur 35 réalise la comparaison correspondante.

Dans un mode de réalisation particulier, permettant de garantir une plus grande sécurité, on surveille de plus la dérivée de l'incidence α, ce qui permet de vérifier son sens d'évolution. En effet, l'incidence α, suite à une forte rafale de vent verticale par exemple, peut fortement varier et dépasser à court terme l'incidence de décrochage αs.

Pour prendre en compte ce phénomène, le dispositif 19 peut comporter un moyen 36 pour surveiller le sens de variation de l'incidence α. Pour ce faire, il faut que la dérivée de l'incidence (reçue par la liaison ℓ7) ne soit pas trop grande (elle doit rester en dessous d'un seuil αseuil2 prédéterminé, c'est ce que vérifie un comparateur 37) et que l'incidence α ne soit pas trop proche de l'incidence de décrochage αs (la différence reçue du moyen 34 entre ces incidences αs et α doit être supérieure à un seuil αseuil3, c'est ce que vérifie un comparateur 38), afin d'être certain que la variation de l'incidence ne la fera pas atteindre ou dépasser l'incidence de décrochage αs. A titre d'illustration, les valeurs suivantes peuvent être proposées : αseuil2 peut varier de 0,5°/s à 1 °/s et αseuil3 peut valoir environ 7°. A ces deux seules conditions, le moyen 36 autorise la rétraction des becs 1 2, grâce à une porte logique ET 39 qui est reliée par une liaison 40 à la porte 23.

Les moyens 22 et 36 peuvent être montés dans une seule et même unité 41.

Les deux (ou trois) états précités [relatifs à la vitesse (moyen 21) et à l'incidence (moyen 22) de l'avion 2, ainsi qu'éventuellement à la dérivée de l'incidence (moyen 36)] doivent donc être réunis, pour que le dispositif 19 puisse envoyer aux moyens d'actionnement 14 l'ordre de rétraction des becs 12, par l'intermédiaire de la porte logique ET 23, via la liaison 24.

Par ailleurs, le dispositif 20 prend en compte les conditions d'altitude et de vitesse de l'avion 2, pour interdire au moyen de commande 18 de commander une sortie des becs 12, lorsque des situations de vol pouvant se révéler dommageables auxdits becs 12 ou au comportement de l'avion 2 (seconde condition de vol précitée), sont rencontrées. A cet effet, ledit dispositif 20 peut agir (de façon simplifiée) par une liaison 42 sur un moyen de commutation 43 prévu sur la liaison 18B reliant le moyen de commande 18 aux moyens d'actionnement 14 (figure 2).

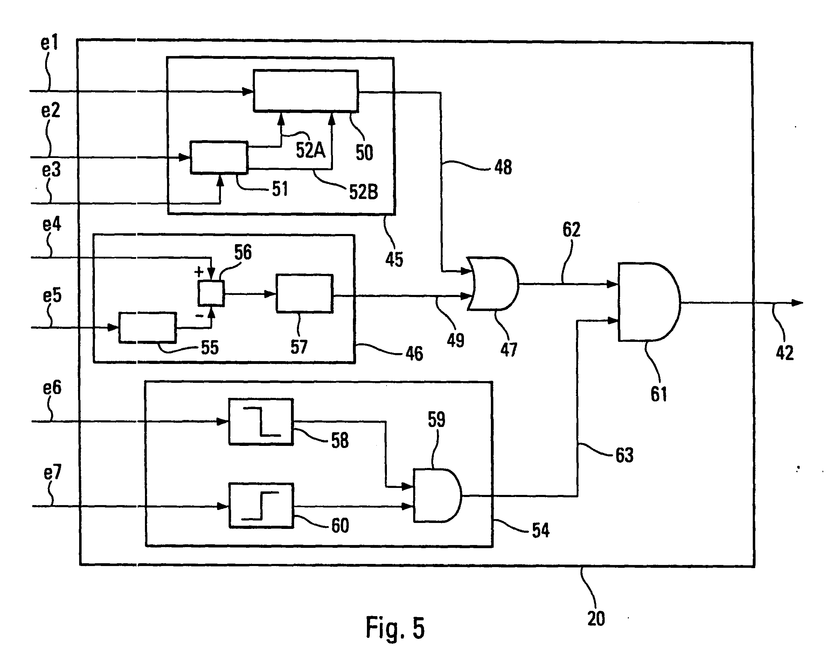

Dans un mode de réalisation préféré représenté sur la figure 5, ledit dispositif 20 qui vérifie, de façon automatique, si l'avion 2 se trouve dans ladite seconde condition de vol précitée, comporte :
- un moyen 45 pour surveiller la vitesse de l'avion 2 et émettre le cas échéant un premier signal indiquant un dépassement d'une vitesse limite autorisée ;
- un moyen 46 pour surveiller l'altitude de l'avion 2 et émettre le cas échéant un second signal indiquant un dépassement d'une altitude limite autorisée ; et
- un moyen 47, en l'occurrence une porte logique OU, pour engendrer des ordres d'inhibition, lorsqu'au moins l'un desdits moyens 45 et 46 émet l'un desdits premier et second signaux (par des liaisons 48 et 49).

Le dispositif 20 est relié, par une pluralité de liaisons e1 à e7 (regroupées sous une référence unique E1 sur la figure 2), à l'ensemble 27 de sources d'informations.

Ledit moyen 45 comporte un comparateur 50 pour comparer la vitesse effective V de l'avion 2 (reçue par la liaison e1) à ladite vitesse limite autorisée correspondant à une vitesse maximale autorisée reçue d'une table 51 par une liaison 52A.

Cette table 51 qui peut être similaire à la table 29 de la figure 3, est aussi fonction de la masse de l'avion 2 (liaison e3) mais, cette fois, fonction de la configuration becs/volets que l'on cherche à atteindre (liaison e2). Cette table 51 donne la vitesse maximale Vseuil3 que la vitesse V de l'avion 2 ne doit pas dépasser afin de ne pas endommager les becs 12 lors de leur sortie. Au-delà de cette vitesse Vseuil3, la sortie des becs 12 est inhibée afin de protéger ces derniers contre des charges aérodynamiques excessives.

De plus, afin d'éviter un mouvement perpétuel desdits becs 12 dans le cas où la vitesse V de l'avion 2 oscillerait autour de cette vitesse Vseuil3, on introduit un élément d'hystérésis 53 (figure 6) dans le comparateur 50. Tant que la vitesse V de l'avion 2 n'est pas redescendue au-dessous d'une vitesse Vseuil4 (inférieure à la vitesse Vseuil3 et transmise par une liaison 52B au comparateur 50), ledit comparateur 50 émet comme valeur binaire VB la valeur "1" à la porte logique OU 47, c'est-à-dire les becs 12 ne sont alors pas autorisés à être déployés. Ils restent donc rétractés. Quand la vitesse V de l'avion 2 devient inférieure à la vitesse Vseuil4, la valeur "0" est transmise à la porte logique OU 47, comme valeur binaire VB.

Par ailleurs, le moyen 46 vérifie si la sortie desdits becs 12 est compatible avec l'altitude de vol de l'avion 2. A cet effet, ledit moyen 46 comporte une table 55 donnant, en fonction de la configuration que l'on cherche à atteindre (liaison e5), l'altitude maximale possible pour cette configuration. Par exemple, une sortie des becs 12 depuis leur position "0" (position "croisière") n'est autorisée que si l'altitude de vol est inférieure à 20 000 pieds (environ 6 000 mètres). Ainsi, si la différence calculée par un moyen 56 entre l'altitude de l'avion 2 (reçue par la liaison e4) et l'altitude maximale donnée par la table 55 est positive (vérification faite par un comparateur 57), il est interdit de sortir les becs 12.

L'interdiction de sortie des becs 12 est donc liée à deux conditions : une condition liée à la vitesse (et donc aux charges aérodynamiques s'appliquant sur lesdits becs 12) et une condition liée à l'altitude de vol. Si l'une ou l'autre de ces conditions est rencontrée, les becs 12 ne sont pas autorisés à être déployés, grâce à la porte logique OU 47.

Néanmoins, l'activation du booléen interdisant la sortie des becs 12 n'est réalisée que si le pilote demande une sortie desdits becs 12. Cette condition est déterminée par un moyen 54 détectant l'ordre de la part du pilote de l'avion 2 de sortie desdits becs 12. Il faut donc que l'organe de commande 16 quitte la position représentative de la configuration actuelle (élément 58) et (porte logique ET 59) soit positionné dans la position représentative de la configuration future (élément 60).

Ainsi, en cas de demande de sortie des becs 12 par le pilote et de vitesse excessive ou d'altitude trop élevée, l'ordre d'interdiction de sortie des becs 12 est activé. C'est la fonction mise en oeuvre par une porte logique ET 61 qui est reliée par des liaisons 62 et 63 respectivement auxdites portes 47 et 59.

En d'autres termes, ledit moyen 61 inhibe les ordres de commande correspondant à tout actionnement de l'organe de commande 16 pour déployer lesdits becs 12 lorsque, à la fois, ledit moyen 54 détecte un tel actionnement et ledit moyen 47 engendre des ordres d'inhibition.

On remarquera que l'ordre de commande envoyé aux moyens d'actionnement 14 est donc fonction des conditions de vol. Si aucune contre-indication pour modifier le comportement usuel n'est activée, le moyen de commande 18 réagit de façon usuelle aux ordres donnés par le pilote par l'intermédiaire de l'organe de commande 16, c'est-à-dire que la position des becs 12 est alors calculée par une table usuelle qui est intégrée dans le moyen de commande 18. Cette table est fonction de la position de l'organe de commande 16, déterminée par le pilote.

Si le dispositif 20 interdit la sortie des becs 12, ces derniers conservent leur position actuelle [le moyen de commutation 43 (figure 2) est alors amené dans un état PO et n'est plus relié au moyen de commande 18].

Si le dispositif 19 ordonne la rétraction des becs 12, ces derniers sont rétractés dans une configuration leur assurant une totale sécurité vis-à-vis des charges aérodynamiques et de l'incidence de décrochage. Cette configuration est déterminée par le dispositif 19 en fonction de la position actuelle de l'organe de commande 16, de l'incidence α et du nombre de Mach de l'avion 2. Lorsque les conditions de vol redeviennent favorables à une sortie des becs 12, ledit dispositif 19 inhibe le signal ordonnant la rétraction des becs 12. Les becs 12 sont alors de nouveau commandés de façon usuelle par le moyen de commande 18.

Par ailleurs, on notera que toutes les tables du système 1 conforme à l'invention proviennent de calculs structuraux ou aérodynamiques réalisés par des modèles informatiques et validés par des essais en vol.

La présente invention décrite précédemment est appliquée, conformément à un mode de réalisation préféré, à des becs 12 de bord d'attaque d'ailes 4 d'un avion 2. Bien entendu, une telle description n'est pas limitative, la présente invention pouvant être appliquée à d'autres dispositifs hypersustentateurs d'aéronef, par exemple simultanément auxdits becs 12 et volets 13 de l'avion 2.

## Revendications

1. Système pour commander automatiquement des dispositifs hypersustentateurs (12, 13) d'un aéronef (2), en particulier des becs (12) de bord d'attaque d'aile (4), qui sont susceptibles d'être déployés et rétractés, ledit système (1) comportant :
- des moyens d'actionnement (14), pour déplacer lesdits dispositifs hypersustentateurs (12, 13), en fonction d'ordres de commande reçus ;
- au moins un organe de commande (16) susceptible d'être actionné par un pilote de l'aéronef (2) ; et
- une unité de commande (17) qui comporte un moyen de commande (18) qui est susceptible d'engendrer des ordres de commande, en fonction de l'actionnement dudit organe de commande (16), pour commander lesdits moyens d'actionnement (14) de sorte que ces derniers amènent lesdits dispositifs hypersustentateurs (12, 13) dans une position déterminée,
**caractérisé en ce que** ladite unité de commande (17) comporte de plus:
- un premier dispositif (19) susceptible d'engendrer, automatiquement, des ordres de commande auxiliaires qui sont transmis auxdits moyens d'actionnement (14) pour rétracter automatiquement lesdits dispositifs hypersustentateurs (12, 13), lorsque l'aéronef (2) se trouve dans une première condition de vol ; et
- un second dispositif (20) pour inhiber, automatiquement, des ordres de commande engendrés par ledit moyen de commande (18) suite à un actionnement dudit organe de commande (16) pour déployer lesdits dispositifs hypersustentateurs (12, 13), lorsque l'aéronef (2) se trouve dans une seconde condition de vol.

2. Système selon la revendication 1,
**caractérisé en ce que** ledit premier dispositif (19) vérifie en continu, de façon automatique, si l'aéronef (2) se trouve dans ladite première condition de vol, en tenant compte de la vitesse et de l'incidence de l'aéronef (2).

3. Système selon l'une des revendications 1 et 2,
**caractérisé en ce que** ledit premier dispositif (19) comporte:
- un premier moyen (21) pour surveiller la vitesse de l'aéronef (2) et émettre !e cas échéant un premier signal indiquant un dépassement d'une vitesse limite autorisée ;
- un deuxième moyen (22) pour surveiller l'incidence de l'aéronef (2) et émettre le cas échéant un deuxième signal indiquant un dépassement d'une incidence limite autorisée ; et
- un troisième moyen (23) pour engendrer lesdits ordres de commande auxiliaires, lorsqu'au moins lesdits premier et deuxième moyens (21, 22) émettent en même temps lesdits premier et deuxième signaux.

4. Système selon la revendication 3,
**caractérisé en ce que** ledit premier moyen (21) compare la vitesse effective de l'aéronef (2) à ladite vitesse limite autorisée correspondant à une vitesse maximale autorisée, qui dépend de la configuration actuelle et de la masse de l'aéronef (2).

5. Système selon l'une des revendications 3 et 4,
**caractérisé en ce que** ledit deuxième moyen (22) compare l'incidence effective de l'aéronef (2) à ladite incidence limite autorisée correspondant à une incidence de décrochage qui dépend d'une configuration de l'aéronef (2) que l'on cherche à obtenir et du nombre de Mach de l'aéronef (2).

6. Système selon l'une quelconque des revendications 3 à 5,
**caractérisé en ce que** ledit premier dispositif (19) comporte, de plus, un quatrième moyen (36) pour surveiller la dérivée de l'incidence de l'aéronef (2) et émettre le cas échéant un quatrième signal, et **en ce que** ledit troisième moyen (3) engendre lesdits ordres de commande auxiliaires, uniquement lorsque ledit quatrième signal est émis en même temps que lesdits premier et deuxième signaux.

7. Système selon la revendication 6,
**caractérisé en ce que** ledit quatrième moyen (36) comporte:
- un premier élément (37) pour comparer la dérivée de l'incidence de l'aéronef (2) à une valeur de seuil prédéterminée et émettre le cas échéant un signal indiquant un dépassement de cette valeur de seuil;
- un deuxième élément (38) pour comparer l'incidence effective de l'aéronef (2) à une valeur d'incidence dépendant de l'incidence de décrochage et émettre le cas échéant un signal indiquant un dépassement de cette valeur d'incidence ; et
- un troisième élément (39) pour engendrer ledit quatrième signal, lorsque lesdits premier et deuxième éléments (37, 38) émettent en même temps des signaux de dépassement.

8. Système selon l'une quelconque des revendications précédentes,
**caractérisé en ce que** ledit second dispositif (20) vérifie, de façon automatique, si l'aéronef (2) se trouve dans ladite seconde condition de vol, en tenant compte de la vitesse et de l'altitude de l'aéronef (2).

9. Système selon l'une quelconque des revendications précédentes,
**caractérisé en ce que** ledit second dispositif (20) comporte:
- un cinquième moyen (45) pour surveiller la vitesse de l'aéronef (2) et émettre le cas échéant un cinquième signal indiquant un dépassement d'une vitesse limite autorisée;
- un sixième moyen (46) pour surveiller l'altitude de l'aéronef (2) et émettre le cas échéant un sixième signal indiquant un dépassement d'une altitude limite autorisée ; et
- un septième moyen (47) pour engendrer des ordres d'inhibition, lorsqu'au moins l'un desdits cinquième et sixième moyens (45, 46) émet l'un desdits cinquième et sixième signaux.

10. Système selon la revendication 9,
**caractérisé en ce que** ledit cinquième moyen (45) compare la vitesse effective de l'aéronef (2) à ladite vitesse limite autorisée correspondant à une vitesse maximale autorisée, qui dépend de la configuration actuelle et de la masse de l'aéronef (2).

11. Système selon la revendication 10,
**caractérisé en ce que** ledit cinquième moyen (45) comporte, de plus, une boucle d'hystérésis (53).

12. Système selon l'une quelconque des revendications 9 à 11,
**caractérisé en ce que** ledit sixième moyen (46) compare l'altitude effective de l'aéronef (2) à ladite altitude limite autorisée correspondant à une altitude maximale possible pour une configuration de l'aéronef (2) que l'on cherche à obtenir.

13. Système selon l'une quelconque des revendications 9 à 12,
**caractérisé en ce que** ledit second dispositif (20) comporte, de plus :
- un huitième moyen (54) susceptible de détecter tout actionnement de l'organe de commande (16) pour déployer lesdits dispositifs hypersustentateurs (12, 13) ; et
- un neuvième moyen (61) qui inhibe les ordres de commande correspondant à un tel actionnement pour déployer lesdits dispositifs hypersustentateurs (12, 13), lorsque, à la fois, ledit huitième moyen (54) détecte un tel actionnement et ledit septième moyen (47) engendre des ordres d'inhibition.

## Claims

1. A system for automatically controlling lift-enhancing devices (12, 13) of an aircraft (2), in particular wing (4) leading edge slats (12), which are able to be deployed and retracted, said system (1) comprising:
- actuation means (14), for moving said lift-enhancing devices (12, 13), as a function of control orders received;
- at least one control member (16) able to be actuated by a pilot of the aircraft (2); and
- a control unit (17) which comprises a control means (18) which is able to produce control orders, as a function of the actuation of said control member (16), so as to control said means of actuation (14) so that the latter bring said lift-enhancing devices (12, 13) into a determined position,
**characterized in that** said control unit (17) furthermore comprises:
- a first device (19) able to produce, automatically, auxiliary control orders which are transmitted to said actuation means (14) so as to automatically retract said lift-enhancing devices (12, 13), when the aircraft (2) is in a first flight condition; and
- a second device (20) for automatically disabling control orders produced by said control means (18) following actuation of said control member (16) so as to deploy said lift-enhancing devices (12, 13), when the aircraft (2) is in a second flight condition.

2. The system as claimed in claim 1,
**characterized in that** said first device (19) continuously and automatically verifies whether the aircraft (2) is in said first flight condition, by taking account of the speed and of the angle of incidence of the aircraft (2).

3. The system as claimed in either of claims 1 and 2,
**characterized in that** said first device (19) comprises:
- a first means (21) for monitoring the speed of the aircraft (2) and for emitting as appropriate a first signal indicating an overshoot of a permitted limit speed;
- a second means (22) for monitoring the angle of incidence of the aircraft (2) and for emitting as appropriate a second signal indicating an overshoot of a permitted limit angle of incidence; and
- a third means (23) for producing said auxiliary control orders, when at least said first and second means (21, 22) emit said first and second signals at the same time.

4. The system as claimed in claim 3,
**characterized in that** said first means (21) compares the actual speed of the aircraft (2) with said permitted limit speed corresponding to a permitted maximum speed, which depends on the current configuration and on the weight of the aircraft (2).

5. The system as claimed in either of claims 3 and 4,
**characterized in that** said second means (22) compares the actual angle of incidence of the aircraft (2) with said permitted limit angle of incidence corresponding to a stalling angle of incidence which depends on a configuration of the aircraft (2) that one seeks to obtain and on the Mach number of the aircraft (2).

6. The system as claimed in either of claims 3 to 5,
**characterized in that** said first device (19) furthermore comprises a fourth means (36) for monitoring the derivative of the angle of incidence of the aircraft (2) and for emitting as appropriate a fourth signal, and **characterized in that** said third means (3) produces said auxiliary control orders, only when said fourth signal is emitted at the same time as said first and second signals.

7. The system as claimed in claim 6,
**characterized in that** said fourth means (36) comprises:
- a first element (37) for comparing the derivative of the angle of incidence of the aircraft (2) with a predetermined threshold value and for emitting as appropriate a signal indicating an overshoot of this threshold value;
- a second element (38) for comparing the actual angle of incidence of the aircraft (2) with an angle of incidence value dependent on the stalling angle of incidence and for emitting as appropriate a signal indicating an overshoot of this angle of incidence value; and
- a third element (39) for producing said fourth signal, when said first and second elements (37, 38) emit overshoot signals at the same time.

8. The system as claimed in either of the preceding claims,
**characterized in that** said second device (20) verifies, automatically, whether the aircraft (2) is in said second flight condition, by taking account of the speed and of the altitude of the aircraft (2).

9. The system as claimed in either of the preceding claims ,
**characterized in that** said second device (20) comprises:
- a fifth means (45) for monitoring the speed of the aircraft (2) and for emitting as appropriate a fifth signal indicating an overshoot of a permitted limit speed;
- a sixth means (46) for monitoring the altitude of the aircraft (2) and for emitting as appropriate a sixth signal indicating an overshoot of a permitted limit altitude; and
- a seventh means (47) for producing disabling orders, when at least one of said fifth and sixth means (45, 46) emits one of said fifth and sixth signals.

10. The system as claimed in claim 9,
**characterized in that** said fifth means (45) compares the actual speed of the aircraft (2) with said permitted limit speed corresponding to a permitted maximum speed, which depends on the current configuration and on the weight of the aircraft (2).

11. The system as claimed in claim 10,
**characterized in that** said fifth means (45) furthermore comprises a hysteresis loop (53).

12. The system as claimed in either of claims 9 to 11,
**characterized in that** said sixth means (46) compares the actual altitude of the aircraft (2) with said permitted limit altitude corresponding to a possible maximum altitude for a configuration of the aircraft (2) that one seeks to obtain.

13. The system as claimed in either of claims 9 to 12,
**characterized in that** said second device (20) furthermore comprises:
- an eighth means (54) able to detect any actuation of the control member (16) to deploy said lift-enhancing devices (12, 13); and
- a ninth means (61) which disables the control orders corresponding to such an actuation to deploy said lift-enhancing devices (12, 13), when, at one and the same time, said eighth means (54) detects such an actuation and said seventh means (47) produces disabling orders.

## Patentansprüche

1. System zur automatischen Steuerung von Hochauftriebseinrichtungen (12, 13) eines Flugzeugs (2), insbesondere von Nasenklappen (12) an der Vorderkante eines Flügels (4), die ausgefahren und eingezogen werden können, wobei das System (1) umfasst:
- Wirkelemente (14), um die Hochauftriebseinrichtungen (12, 13) in Abhängigkeit von erhaltenen Steuerbefehlen zu verstellen;
- wenigstens ein Steuerelement (16), das durch einen Piloten des Flugzeugs (2) betätigt werden kann; und
- eine Steuereinheit (17), die ein Steuerelement (18) umfasst, das Steuerbefehle in Abhängigkeit von der Betätigung des Steuerelements (16) erzeugen kann, um die Wirkelemente (14) zu steuern, derart, dass diese die Hochauftriebseinrichtungen (12, 13) in eine bestimmte Position bringen,
**dadurch gekennzeichnet, dass** die Steuereinheit (17) ferner umfasst:
- eine erste Einrichtung (19), die automatisch Zusatz-Steuerbefehle erzeugen kann, die an die Wirkelemente (14) übertragen werden, um die Hochauftriebseinrichtungen (12, 13) automatisch einzuziehen, wenn sich das Flugzeug (2) in einem ersten Flugzustand befindet; und
- eine zweite Einrichtung (20), um automatisch die durch das Steuerelement (18) infolge einer Betätigung des Steuerelements (16) zum Ausfahren der Hochauftriebseinrichtungen (12, 13) erzeugten Steuerbefehle automatisch zu unterbinden, wenn sich das Flugzeug (2) in einem zweiten Flugzustand befindet.

2. System nach Anspruch 1,
**dadurch gekennzeichnet, dass** die erste Einrichtung (19) fortlaufend automatisch unter Berücksichtigung der Geschwindigkeit und des Anstellwinkels des Flugzeugs (2) verifiziert, ob sich das Flugzeug (2) in dem ersten Flugzustand befindet.

3. System nach einem der Ansprüche 1 und 2,
**dadurch gekennzeichnet, dass** die erste Einrichtung (19) umfasst:
- ein erstes Mittel (21), um die Geschwindigkeit des Flugzeugs (2) zu überwachen und gegebenenfalls ein erstes Signal zu senden, welches ein Übersteigen einer zulässigen Grenzgeschwindigkeit anzeigt;
- ein zweites Mittel (22), um den Anstellwinkel des Flugzeugs (2) zu überwachen und gegebenenfalls ein zweites Signal zu senden, welches ein Übersteigen des zulässigen Grenzwinkels anzeigt; und
- ein drittes Mittel (23), um die Zusatz-Steuerbefehle zu erzeugen, wenn wenigstens das erste und das zweite Mittel (21, 22) gleichzeitig das erste und zweite Signal senden.

4. System nach Anspruch 3,
**dadurch gekennzeichnet, dass** das erste Mittel (21) die Istgeschwindigkeit des Flugzeugs (2) mit der zulässigen Grenzgeschwindigkeit vergleicht, die einer zulässigen Maximalgeschwindigkeit entspricht, welches von der aktuellen Konfiguration und der Masse des Flugzeugs (2) abhängt.

5. System nach einem der Ansprüche 3 und 4,
**dadurch gekennzeichnet, dass** das zweite Mittel (22) den Ist-Anstellwinkel des Flugzeugs (2) mit dem zulässigen Grenz-Anstellwinkel vergleicht, der einem Abrisswinkel entspricht, der von einer zu erhaltenden Konfiguration des Flugzeugs (2) und der Mach-Zahl des Flugzeugs (2) abhängt.

6. System nach einem der Ansprüche 3 bis 5,
**dadurch gekennzeichnet, dass** die erste Einrichtung (19) ferner ein viertes Mittel (36) umfasst, um die Ableitung des Anstellwinkels des Flugzeugs (2) zu überwachen und gegebenenfalls ein viertes Signal zu senden, und dass das dritte Mittel (3) die Zusatz-Steuerbefehle nur dann erzeugt, wenn das vierte Signal gleichzeitig mit dem ersten und zweiten Signal gesendet wird.

7. System nach Anspruch 6,
**dadurch gekennzeichnet, dass** das vierte Mittel (36) umfasst:
- ein erstes Element (37), um die Ableitung des Anstellwinkels des Flugzeugs (2) mit einem vorbestimmten Schwellenwert zu vergleichen und gegebenenfalls ein Signal zu senden, welches ein Übersteigen dieses Schwellenwertes anzeigt;
- ein zweites Element (38), um den Ist-Anstellwinkel des Flugzeugs (2) mit einem Anstellwinkel zu vergleichen, der von dem Abrisswinkel abhängt, und gegebenenfalls ein Signal zu senden, das ein Übersteigen dieses Anstellwinkelwertes anzeigt; und
- ein drittes Element (39), um das vierte Signal zu erzeugen, wenn das erste und zweite Element (37, 38) gleichzeitig Übersteigungssignale senden.

8. System nach einem der vorhergehenden Ansprüche,
**dadurch gekennzeichnet, dass** die zweite Einrichtung (20) automatisch unter Berücksichtigung der Geschwindigkeit und der Höhe des Flugzeugs (2) verifiziert, ob sich das Flugzeug (2) in dem zweiten Flugzustand befindet.

9. System nach einem der vorhergehenden Ansprüche,
**dadurch gekennzeichnet, dass** die zweite Einrichtung (20) umfasst:
- ein fünftes Mittel (45), um die Geschwindigkeit des Flugzeugs (2) zu überwachen und gegebenenfalls ein fünftes Signal zu senden, welches ein Übersteigen einer zulässigen Grenzgeschwindigkeit anzeigt;
- ein sechstes Mittel (46), um die Höhe des Flugzeugs (2) zu überwachen und gegebenenfalls ein sechstes Signal zu senden, welches ein Übersteigen einer zulässigen Grenzhöhe anzeigt; und
- ein siebtes Mittel (47), um Unterbindungsbefehle zu senden, wenn wenigstens eines der fünften und sechsten Mittel (45, 46) ein fünftes und sechstes Signal sendet.

10. System nach Anspruch 9,
**dadurch gekennzeichnet, dass** das fünfte Mittel (45) die Istgeschwindigkeit des Flugzeugs (2) mit der zulässigen Grenzgeschwindigkeit vergleicht, welche einer zulässigen Maximalgeschwindigkeit entspricht, die von der aktuellen Konfiguration und der Masse des Flugzeugs (2) abhängt.

11. System nach Anspruch 10,
**dadurch gekennzeichnet, dass** das fünfte Mittel (45) ferner eine Hysterese-Schleife (53) umfasst.

12. System nach einem der Ansprüche 9 bis 11,
**dadurch gekennzeichnet, dass** das sechste Mittel (46) die Ist-Höhe des Flugzeugs (2) mit der zulässigen Grenzhöhe vergleicht, welche einer maximal möglichen Höhe für eine zu erreichende Konfiguration des Flugzeugs (2) entspricht.

13. System nach einem der Ansprüche 9 bis 12,
**dadurch gekennzeichnet, dass** die zweite Einrichtung (20) ferner umfasst:
- ein achtes Mittel (54), das jede Betätigung des Steuerelements (16) zum Ausfahren der Hochauftriebseinrichtungen (12, 13) erfassen kann; und
- ein neuntes Mittel (61), welches die Steuerbefehle, die einer solchen Betätigung zum Ausfahren der Hochauftriebseinrichtungen (12, 13) entsprechen, unterbindet, wenn gleichzeitig das achte Mittel (54) eine solche Betätigung erfasst und das siebte Mittel (47) Unterbindungsbefehle erzeugt.
